# EUROPEAN PATENT APPLICATION

(11) **EP 1 402 941 A1**
(43) Date of publication of application: **31.03.2004**
(21) Application number: 02741207.1
(22) Date of filing: 20.06.2002
(51) Int. Cl.: B01J 2/12, B01J 2/16, B05B 7/10

(54) **POWDER PARTICLE PROCESSING DEVICE**

(30) Priority: 22.06.2001 JP 2001190034; 22.06.2001 JP 2001190042
(71) Applicant: Kabushiki Kaisha Powrex, Osaka-shi, Osaka 541-0051 (JP)
(72) Inventor: NATSUYAMA, Susumu, Osaka-shi, Osaka 546-0016 (JP); HASEGAWA, Kouji, Itami-shi, Hyogo 664-0874 (JP); MORITA, Noriyuki, Itami-shi, Hyogo 664-0837 (JP); MATUURA, Hiroshi, Itami-shi, Hyogo 664-0023 (JP); OOISHI, Kazuo, Kyoutanabe-shi, Kyoto 610-0331 (JP)
(74) Representative: White, Duncan Rohan
(86) International application number: PCT/JP2002/006142
(87) International publication number: WO 2003/000397

(57) **Abstract**

The orientation and the height of a spray gun are adjusted so that a spray distance (a distance between the injection outlet of the spray gun and the rolling bed of the powder particles) reaches a desired value, and the spray gun is used under the conditions that an injection pressure of atomized air is 0.2 MPa or above and preferably 0.2 to 0.6 MPa, and an air flow rate of atomized air is 10 to 180 Nl/min.

## Description

### Background of the Invention

### Field of the Invention

The present invention relates to a powder processing apparatus used in manufacturing tablets, soft capsules, pellets, granules, fine grains, etc. of medicines, agricultural chemicals, food, etc.

### Description of the Related Art

For example, a coating apparatus equipped with a rotating drum is used to apply film coating, sugarcoating, etc. to powder particles, such as tablets and granules. The coating apparatus of this kind is generally called a pan coating apparatus, and includes a rotating drum. A body portion of the rotating drum is of a polygonal or circular cylinder and is installed rotatably about the axis line. A plurality of ventilation porous portions are provided in the entire circumference or on the periphery of the body portion. A ventilation jacket covers the outside of each ventilation porous portion and a ventilation channel is thereby defined. Each ventilation channel communicates with a feed duct or an exhaust duct when it comes to a predetermined position in association with rotations of the rotation drum. Accordingly, a temperature-controlled gas at a predetermined temperature, for example, dry air, is fed into the rotating drum from the feed duct through the ventilation channel and the corresponding ventilation porous portion, and dry air within the rotating drum is exhausted to the exhaust duct through the ventilation porous portion and the ventilation channel.

When the rotating drum rotates in a predetermined direction, a rolling bed of the powder particles is formed within the rotating drum. Then, a spray liquid, such as a filming agent liquid, is sprayed toward the rolling bed of the powder particles from a spray gun. The base components in the spray liquid then adhere to the surfaces of the powder particles and a coating layer is thereby formed (a so-called powder additional method may be adopted, according to which the surfaces of the powder particles are brought into an adequate wet state with a spray liquid, and the surfaces of the particles are coated with powder through dispersive addition).

The coating apparatus of this kind is known to cause a significant difference in aspect, quality, size distribution, etc. of the product particles depending on the movement state of raw particles, air feeding/exhausting conditions, components and spray conditions of a spray liquid. The spray condition of a spray liquid is set chiefly to be able to spray mist of a spray liquid with an optimal and uniform mist size depending on the properties (viscosity, spreadability, seepage ability, etc.) of a spray liquid, properties (particle size, hygroscopicity, surface wetting property, etc.) of raw particles, etc., which closely relates to the selection of a spray liquid, and a feeding rate of a spray liquid and an injection pressure and an air flow rate of atomized air from a spray gun.

Incidentally, the coating apparatus described above may become unable to obtain a stable spray state as solid components in a spray liquid adhere to the spray gun and eventually deposit around the injection outlet of the spray gun and the spray gun is contaminated as the deposit is grown. Hence, in order to maintain a stable spray state by reducing contamination of the spray gun, Japanese Patent Laid-Open Publication No. 2000-140709 proposes the use of an HVLP type (High Volume Low Pressure) spray gun as the spray gun equipped to the coating apparatus. According to the description of the above publication, the advantages achieved through the use of the HVLP type spray gun are as follows. That is, because a coating liquid is injected at a low pressure, splash of a sprayed coating liquid from an object is reduced. Also, a quantity of mist scattered within a processing container is reduced. Further, the linear velocity of injected air becomes smaller, which eases air entrainment around the nozzle. Contamination of the nozzle due to adhesion of a coating liquid can be thus suppressed, and subsequently a stable spray state can be maintained over a long period.

Generally, in a spray gun that sprays a spray liquid using atomized air, an injection pressure of atomized air (normally, a cap internal pressure of the spray gun) relates to atomization of a spray liquid. An injection pressure of a certain degree is therefore necessary in order to obtain an adequate spray state. To this end, the HVLP type spray gun ensures atomization of a spray liquid by reducing an injection pressure while increasing an air flow rate of atomized air and thereby compensating a reduction of the injection pressure with the air flow rate. For this reason, a larger quantity of air is used during processing, which poses a problem that the processing costs and the size of the facility are increased.

Also, because a high volume of air is injected from the spray gun, it is necessary to secure a relatively large spray distance (a distance between the injection outlet of the spray gun and the surface of the rolling bed of the powder particles). Hence, a so-called spray dry phenomenon readily occurs (a phenomenon in which mist of a spray liquid does not adhere to the powder particles and is dried to powdery dust instead), which may result in a loss of a spray liquid, generation of powdery dust, and extension of a processing time. Also, there is a possibility that a high volume of air injected from the spray gun causes a temperature drop inside the rotating drum, which in turn causes extension of a processing time, or an increase in quantity of exhaust demands an increase of the exhaust facility in size.

Meanwhile, a fluidized bed apparatus is used for granulation or coating of powder particles, such as fine grains and granules. The fluidized bed apparatus generally performs granulation or coating by spraying mist of a spray liquid (binding liquid, filming agent liquid, etc.) from a spray gun while forming a fluidized bed of the powder particles within a processing container using fluidizing air introduced from the bottom of the processing container. Of the fluidized bed apparatuses of this type, those involving at least one of rolling, jetting, and stirring of the powder particles are referred to as a compound fluidized bed apparatus. Also, the spray method includes: a method of spraying a spray liquid from top in a downward direction of the fluidized bed (top spray method); a method of spraying a spray liquid in an upward direction from the bottom of the processing container (bottom spray method); and a method of spraying a spray liquid in a tangential direction from the side portion (the side closer to the bottom) of the processing container (tangential spray method).

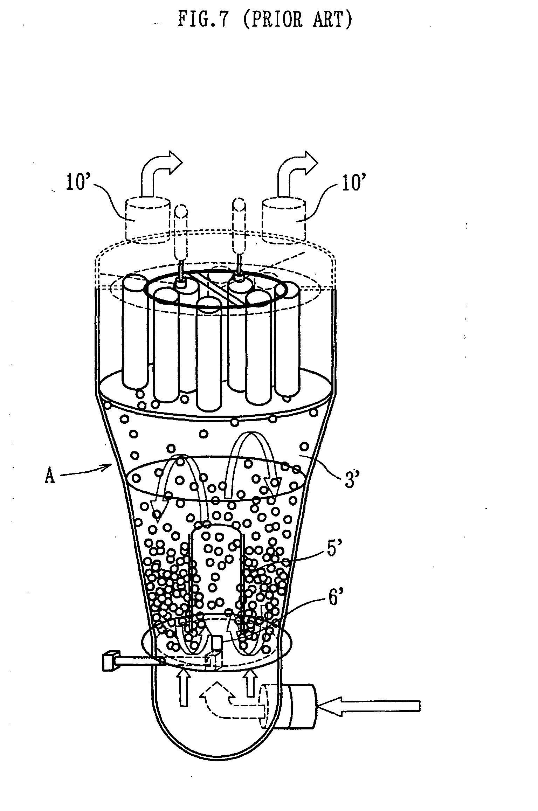

FIG 7 shows an example of a structure of a compound fluidized bed apparatus involving jetting of the powder particles (known as a Worster fluidized bed apparatus). This fluidized bed apparatus has a draft tube 5' at the center of a processing container 3', and induces an upward stream (jet) of the powder particles on an air current rising above inside the tube 5', while performing coating by spraying a spray liquid, such as a filming agent liquid and a medical agent liquid, toward the powder particles inside the draft tube 5' in an upward direction from a spay gun 6' installed at the center of the bottom of the processing container 3' (bottom spray method).

A filter chamber is provided above the processing container 3'. Fluidizing air introduced into the processing container 3' via a feed duct contributes to fluidization and jetting of the powder particles, after which the fluidizing air rises above within the processing container 3' and enters the filter chamber. Further, it is exhausted to an exhaust duct 10' by passing through a filter system installed in the filter chamber. In this instance, fine particles (abrasive powder from raw particles, fine powder generated as solid components in a spray liquid is dried to solid, etc.) mixed in the exhaust are collected at the filter system, and thereby is prevented from being discharged to the outside.

According to the fluidized bed apparatus of this type, because a large quantity of powder particles can be delivered to the coating zone at a high speed, a so-called spray dry phenomenon (a phenomenon in which mist of a spray liquid does not adhere to the powder particles and is dried to powdery dust instead) and secondary aggregation of particles hardly occur, and therefore coating at a high yield with respect to fine particles can be achieved.

The fluidized bed apparatus of this type is also known to cause a significant difference in aspect, quality, size distribution, etc. of the product particles depending on the movement state of raw particles, air feeding/exhausting conditions, components and spray conditions of a spray liquid. The spray condition of a spray liquid is set chiefly to be able to spray mist of a spray liquid with an optimal and uniform mist size depending on the properties (viscosity, spreadability, seepage ability, etc.) of a spray liquid, properties (particle size, hygroscopicity, surface wetting property, etc.) of raw particles, etc., which closely relates to the selection of a spray liquid, and a feeding rate of a spray liquid and an injection pressure and an air flow rate of atomized air from a spray gun.

The fluidized bed apparatus of this type generally uses, as a spray gun equipped thereto, a standard spray gun that turns a spray liquid into mist using a relatively high volume of atomized air at a high pressure. However, because the standard spray gun uses a relatively high volume of atomized air at a high pressure in turning a spray liquid into mist, a flow velocity of atomized air is so high when it reaches the powder particles that the powder particles may be pulverized by a stream of atomized air (stream of mist). In the fluidized bed apparatus adopting the bottom spray method, there may be a case that the powder particles are blown up to the upper portion of the processing container by a stream of atomized air, and cannot return to the fluidized bed. These phenomena are concerned to cause irregularity in the product quality, a broadened size distribution of product particles, and a reduction of product yield.

Also, because the spray gun uses a large quantity of air, the processing costs and the size of the facility are increased. Further, because a high volume of air is injected from the spray gun, there is a possibility that the temperature inside the processing container drops, which results in extension of processing time, or an increase in quantity of exhaust results in an increase in size of the exhaust facility, such as the filter system. In particular, because the HVLP type spray gun described above uses a higher volume of atomized air than the standard spray gun, these tendencies become more apparent.

### Brief Summary of the Invention

It is therefore an object of the invention to maintain a stable spray state by suppressing contamination of a spray gun due to adhesion of a spray liquid.

Another object of the invention is to save the processing costs and reduce the facility in size by using a less quantity of air while ensuring atomization of a spray liquid by a spray gun.

Still another object of the invention is to shorten the processing time and reduce the exhaust facility in size by suppressing a temperature drop in the processing container and an increase in quantity of exhaust due to air injected from the spray gun.

Still another object of the invention is to prevent the occurrence of a so-called spray dry phenomenon by shortening a spray distance in a powder processing apparatus equipped with a rotating drum.

Still another object of the invention is to make the product quality uniform, sharpen the size distribution of product particles, and improve the product yield by suppressing pulverization and a blown-up phenomenon of the powder particles caused by a stream of atomized air injected from the spray gun in a powder processing apparatus equipped with a fluidized bed container.

In order to achieve the above and other objects, a powder processing apparatus of the invention is a powder processing apparatus for performing one of granulation and coating by spraying mist of a spray liquid toward the powder particles within a processing container from a spray gun, wherein the conditions of the spray gun are as follows: an injection pressure of atomized air is 0.2 MPa or above and preferably 0.2 to 0.6 MPa, and an air flow rate of atomized air is 10 to 180 Nl/min and preferably 10 to 120 Nl/min. The spray gun with an air flow rate of atomized air of 10 to 50 Nl/min is particularly suitable for use of experiments.

The invention is particularly suitable to a coating apparatus (a so-called pan coating apparatus) that performs coating by spraying mist of a spray liquid from a spray gun toward the powder particles within a rotating drum rotating about the axis line, or to a fluidized bed apparatus that performs granulation or coating by spraying mist of a spray liquid from the spray gun while forming a fluidized bed of the powder particles within a fluidized bed container.

The spray gun used in the invention has a high injection pressure (medium or high pressure) and a small air flow rate (low volume) of atomized air in comparison with the so-called HVLP type spray gun. Also, the injection pressure of atomized air is slightly lower (medium pressure) or equal to or slightly higher (high pressure) and an air flow rate of atomized air is smaller than those of the standard spray gun.

Because the spray gun used in the invention turns a spray liquid into mist with atomized air at a medium or high pressure, a flow velocity of atomized air in the vicinity of the injection outlet is still high even when an air flow rate is reduced, and mist of a spray liquid can be therefore atomized in a satisfactory manner. Also, because a flow velocity of atomized air is low when it reaches the powder particles, a phenomenon (rebound) that mist of a spray liquid splashes back from the powder particles occurs less frequently in a so-called pan coating apparatus, while pulverization and a blown-up phenomenon of the powder particles caused by a stream of atomized air injected from the spray gun hardly occurs in the fluidized bed apparatus. Further, because an air flow rate is small in comparison with the standard spray gun and the HVLP type spray gun, a temperature drop inside the processing container and an increase in quantity of exhaust can be suppressed. Also, a spray distance can be shorted in a so-called pan coating apparatus.

In the above configuration, the spray gun can be of a structure that injects a vortex of atomized air. It is thus possible to turn a spray liquid into finer mist.

In a case where the invention is applied to the fluidized bed apparatus, the invention can achieve a noticeable advantage when the adopted spray method is either the bottom spray method for spraying a spray liquid upward from the bottom of the processing container (fluidized bed container), or the tangential spray method for spraying a spray liquid in the tangential direction from the side portion of the processing container. The invention includes, for example, two configurations as follows. According to a first configuration, a guiding tube is provided beneath the fluidized bed, then an entrained bed of powder particles is formed by introducing a large quantity of fluidizing air into the guiding tube, and a spray liquid is sprayed toward a group of fluidized particles in an upward direction from below (a so-called Worster fluidized bed apparatus). According to a second configuration, a rotary disc is provided to the bottom of the processing container, then, for example, a fluidized bed is formed by introducing fluidizing air through a gap between the rotary disc and the bottom wall surface of the processing container, and a spray liquid is sprayed toward a group of fluidized particles in the tangential direction (a so-called rolling fluidized bed apparatus).

### Brief Description of the Drawings

FIG. 1 is a longitudinal cross section conceptually showing an overall configuration of a coating apparatus according to a first embodiment.

FIG. 2 is a transverse cross section of a rotating drum.

FIG. 3 is a cross section showing one example of a structure of a spray gun.

FIG. 4 is a partial cross section showing a major portion of a fluidized bed apparatus according to a second embodiment.

FIG. 5 is a plan view of a gas scattering plate.

FIG. 6 is a partial cross section showing a major portion of a fluidized bed apparatus according to a third embodiment.

FIG. 7 is a perspective cross section showing one example of a structure of a general fluidized bed apparatus.

### Detailed Description of the Invention

The following description will describe preferred embodiments of the invention.

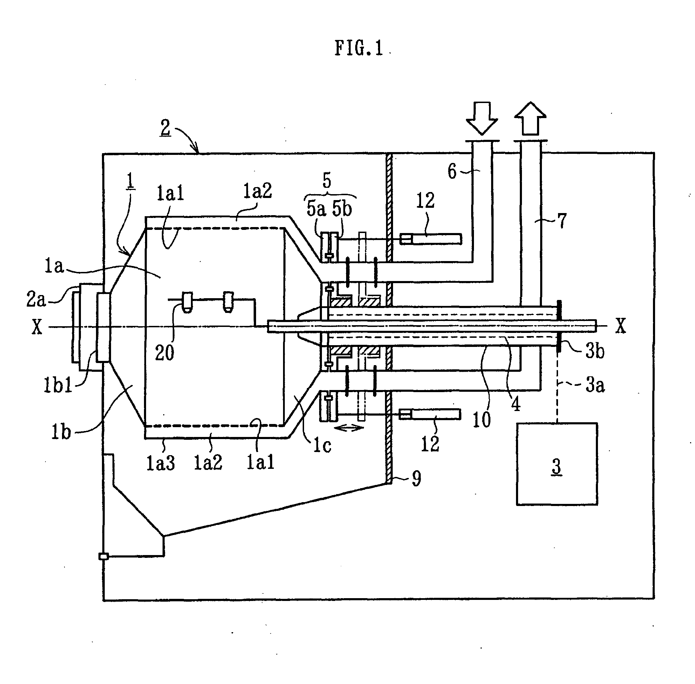

FIG. 1 is a view conceptually showing an overall configuration of a coating apparatus according to a first embodiment. A rotating drum 1 is installed inside a casing 2 to be rotatable about the horizontal axis X, and is rotated in a predetermined direction or a reciprocal direction by a rotational driving device 3 accommodated in the casing 2. In the rotational driving device 3, for example, rotational power of a driving motor is slowed down by a reduction gear, and inputted into a hollow driving shaft 4 through a chain 3a and a sprocket 3b.

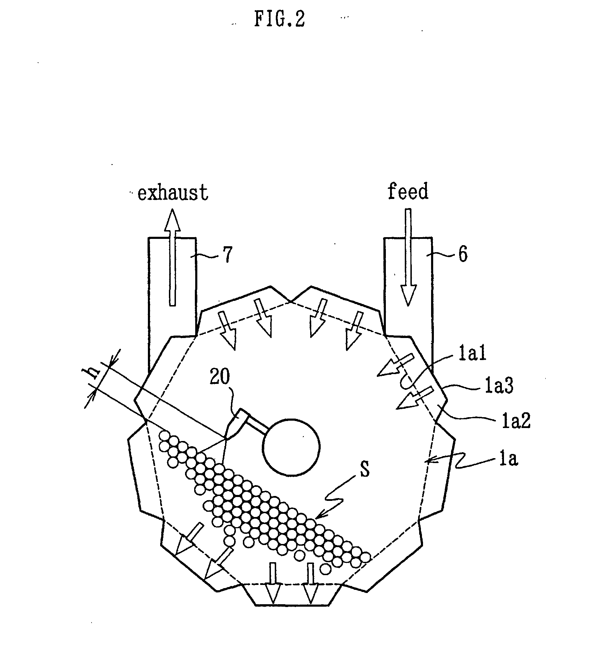

As shown in FIG. 1 and FIG. 2, in this embodiment, the rotating drum 1 includes a body portion 1a of a polygonal cylinder, for example, a regular nonagonal cylinder, and a front wall portion 1b and a rear wall portion 1c of a polygonal cone respectively extending forward and backward from the body portion 1a. An opening portion 1b1 for supplying and discharging powder products is formed in the front wall portion 1b at the center of the tip, and a first disc plate 5a is fixed to the rear wall portion 1c at the center of the tip. For example, nine through holes are made in the first disc plate 5a near the outer periphery at cylinder equipartition positions, respectively. Also, a ventilation porous portion 1a1 made of a porous plate is provided to each side of the body portion 1a, and a ventilation jacket 1a3 covers the outside of the ventilation porous portion 1a1 on each side, and, for example, nine ventilation channels 1a2 are thereby defined. Each ventilation channel 1a2 communicates with the corresponding through hole in the first disc plate 5a at one end.

A cylindrical housing 10 is fixed to the middle wall of the casing 2 with bolts or the like. The driving shaft 4 is inserted into the inner surface of the housing 10, and is supported rotatably with respect to the housing 10 by a rolling bearing or the like. The driving shaft 4 is fit into a boss hole in the first disc plate 5a at one end and coupled thereto with bolts or the like.

A second disc plate 5b is extrapolated slidably on the outer circumferential surface of the housing 10. The second disc plate 5b is slid by slide driving means, for example, an air cylinder 12. The second disc plate 5b (does not rotate even when the rotating drum 1 rotates) forms a ventilation control mechanism 5 in association with the first disc plate 5a (rotates together with the rotating drum 1) provided to the rotating drum 1. In other words, the second disc plate 5b includes a through hole that communicates with an upper ventilation duct 6 and a lower ventilation duct 7, and when any of the ventilation channels 1a2 comes to the position where the through hole of the second disc plate 5b is formed in association with rotations of the rotating drum 1, the ventilation channel 1a2 communicates with the upper ventilation duct 6 or the lower ventilation duct 7 through the ventilation control mechanism 5. A temperature-controlled gas at a predetermined temperature, for example, dry air, is supplied to the ventilation channel 1a2 via the upper ventilation duct 6 (or the lower ventilation duct 7), and fed into the rotating drum 1 from the ventilation channel 1a2 through the ventilation porous portion 1a1. Also, dry air within the rotating drum 1 is exhausted to the lower ventilation duct 7 (or the upper ventilation duct 6) through the ventilation porous portion 1a1 and the ventilation channel 1a2.

When the second disc plate 5b is slid to the right side of FIG. 1 by operating the air cylinder 12 at the time of validation after rinsing, because the ventilation control mechanism 5 is separated between the first disc plate 5a and the second disc plate 5b, it is possible to perform validation of the interior of the ventilation control mechanism 5, the interior of the ventilation channels 1a2, and the interiors of the upper ventilation duct 6 and the lower ventilation duct 7 readily in a reliable manner. As to air fed to or exhausted from the rotating drum 1, in addition to the direct feeding (air is fed from the upper ventilation duct 6 and exhausted from the lower ventilation duct 7) and the reverse feeding (air is fed from the lower ventilation duct 7 and exhausted from the upper ventilation duct 6), the center feeding may be applicable, according to which a center ventilation duct is provided at the center of the front portion (on the side of the mouth ring 2a) of the rotating drum 1, so that air is fed from the center ventilation duct and exhausted from the lower ventilation duct 7. Alternatively, so-called baffles may be provided to the ventilation porous portions 1a1 of the body portion 1a.

One or more spray guns 20 are provided in the interior of the rotating drum 1, and as shown in FIG. 2, a spray liquid, such as a filming agent liquid, is sprayed from the spray gun 20 toward the rolling bed S of the powder particles within the rotating drum 1. A coating layer is thereby formed as the base components in the mist of the spray liquid adhere to the surfaces of the powder particles (film coating). Alternatively, a so-called powder additional method may be adopted, according to which the surfaces of the powder particles are brought into an adequate wet state with mist of a spray liquid, and the surfaces of the particles are coated with powder through dispersive addition.

The orientation and the height of the spray gun 20 are adjusted so that a spray distance h (a distance between the injection outlet of the spray gun 20 and the rolling bed S of the powder particles) reaches a desired value, and the spray gun 20 is used under the conditions that an injection pressure of atomized air is 0.2 MPa or above and preferably 0.2 to 0.6 MPa, and an air flow rate of atomized air is 10 to 180 Nl/min.

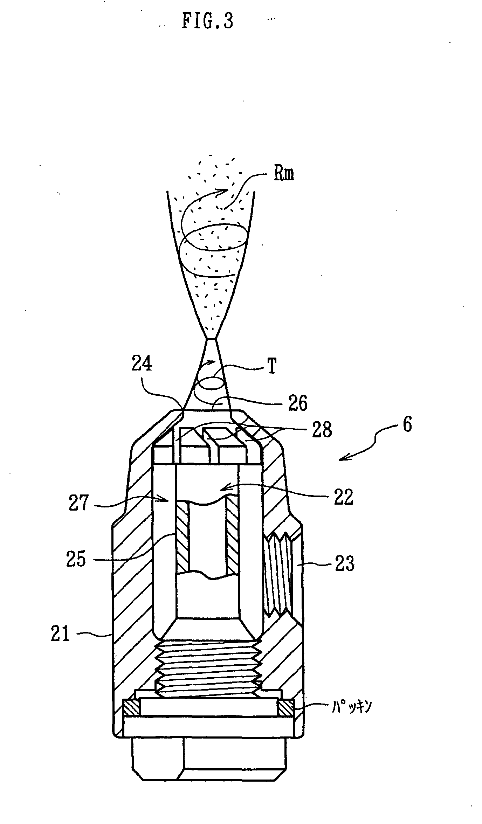

An atomization nozzle as shown in FIG. 3 may be used as the spray gun 20. The atomization nozzle is composed of a nozzle body 21, and a core-like liquid passage member 22 attached to the interior of the nozzle body 21. The nozzle body 21 includes a gas introduction inlet 23 for introducing a gas (atomized air), and a gas injection outlet 24 that injects the gas introduced from the gas introduction inlet 23 to the outside and atomizes a liquid through inject atomization. The liquid passage member 22 includes a liquid passage tube 25 for flowing a liquid supplied into the nozzle, and a liquid injection outlet 26 that opens at the tip of the liquid passage tube 25 and is placed to oppose the gas injection outlet 24. The liquid passage member 22 defines a gas passage 27 that communicates with the gas introduction inlet 23 and the gas injection outlet 24 at the inside of the nozzle body 21, and includes a spiral vortex forming groove 28 for inducing a vortex of the gas. The gas (atomized air) that rises above inside the gas passage 27 is converted into a vortex gas T by a vortex generating portion W chiefly composed of the vortex forming groove 28, and is injected from the gas injection outlet 24. On the other hand, a liquid discharged from the liquid injection outlet 26 comes in contact with the vortex gas T and turns into mist, which is sprayed in the form of fine particle mist Rm.

The nozzle (spray gun) arranged as above is commercially available from ATMAX Inc. in the name of ATMAX NOZZLE, and various types including the AM type, AMC type, AMH type, BN type, BNC type, BNH type, CN type, CNP type, etc. are available. For example, "AMC12B" (injection diameter: 1.2 mm), "AM45S" (injection diameter: 1.5 mm), "BN90S" (injection diameter: 2.0 mm), "BN160S" (injection diameter: 2.0 mm), etc. can be used. In this case, the nozzle is used under the conditions that the injection pressure of atomized air is 0.3 to 0.6 MPa (high pressure), and an air flow rate of atomized air is 10 to 180 Nl/min (low volume).

Alternatively, an LVMP (Low Volume Medium Pressure) gun (injection diameter: 0.7 mm, 1.1 mm, and 1.6 mm) commercially available from Ransburg Industrial Finishing KK (DEVILBISS) can be used as the spray gun 20. For example, "T-AGHV-5805-DFX" (injection diameter: 1.1 mm) and the like can be used. In this case, the spray gun is used under the conditions that the injection pressure of atomized air is 0.2 to 0.3 MPa (medium pressure), and an air flow rate of atomized air is 10 to 180 Nl/min (low volume). This spray gun is of a type that injects atomized air as a normal stream (a stream other than a vortex) and injects pattern adjusting air as well.

Because the spray gun 20 turns a spray liquid into mist with atomized air at a medium or high pressure, a flow velocity of the atomized air in the vicinity of the injection outlet is still high even when an air flow rate is reduced, and mist of a spray liquid can be therefore atomized in a satisfactory manner. Also, because a flow velocity of the atomized air is low when it reaches the powder particles, a phenomenon (rebound) that mist of a spray liquid splashes back from the powder particles occurs less frequently. Further, because an air flow rate is small in comparison with the case of using the standard spray gun or the HVLP type spray gun, not only can the spray distance h be shortened, but also a temperature drop inside the rotating drum 1 and an increase in quantity of exhaust can be suppressed.

The size of mist was measured using mist of a spray liquid at a distance of 250 mm from the injection outlet of the spray gun by spraying the spray liquid from various types of spray guns as set forth in Table 1 below. The spray guns of Examples #1 and #2 are ATMAX NOZZLEs described above (indicated as LVHP guns), and the spray guns of Examples #3 and #4 are LVMP guns described above. The spray guns of Comparative Examples #5 and #6 are the standard spray guns manufactured by DEVILBISS (indicated as HVHP), and the spray gun of Comparative Example #7 is an HVLP gun manufactured by DEVILBISS. The same spray liquid was used for all the spray guns.

**TABLE 1**

| N O | Type of spray gun | Flow rate of spray liquid (g/min) | Air flow rate of atomized air (NL/min) | Injection pressure of atomized air (MPa) | Spread pattern (mm) | Size of mist (Center portion D50) (µm) |
|---|---|---|---|---|---|---|
| 1 | LVHP BM90S | 100 | 80 | 0.2 | φ110 | 13 |
| 2 | LVHP BM90S | 200 | 120 | 0.5 | φ80 | 16 |
| 3 | LVMP T-AGH V-58 | 100 | 150 | 0.36 | φ220 Oval | 10 |
| 4 | LVMP T-AGH V-58 | 200 | 150 | 0.36 | φ230 Oval | 12 |
| 5 | HVHP T-AGB | 100 | 250 | 0.4 | φ180 Oval | 11 |
| 6 | HVHP T-AGB | 200 | 250 | 0.4 | φ260 Oval | 15 |
| 7 | HVLP T-AGH V-56 | 200 | 400 | 0.6 | φ270 Oval | 14 |
| Measuring position: 250 mm from the injection outlet | | | | | | |

It is confirmed from the measurement result set forth in Table 1 above that the spray guns of Examples #1 through #4 are able to spray mist of a spray liquid with a less volume of atomized air while the size of mist is substantially the same in comparison with the standard spray guns of Comparative Examples #5 and #6 and the HVLP gun of Comparative Example #7.

According to the first embodiment, the following advantages can be achieved.

(1) Because a spray liquid is turned into mist by a spray gun used under the conditions that the injection pressure of atomized air is 0.2 MPa or above and an air flow rate of atomized air is 10 to 180 Nl/min, it is possible to save the processing costs and reduce the facility in size using a less quantity of air while ensuring atomization of a spray liquid by the spray gun.

(2) Because a flow velocity of atomized air is low when it reaches the powder particles, a phenomenon (rebound) that mist of a spray liquid splashes back from the powder particles occurs less frequently. Accordingly, contamination of the spray gun due to adhesion of a spray liquid can be suppressed, and consequently a stable spray condition can be maintained. Also, because there occurs no phenomenon that the surface of the rolling bed of the powder particles will be recessed by a stream of atomized air, the powder particles are allowed to roll smoothly, and irregular coating or the like hardly occurs.

(3) Because a flow rate of atomized air is small, it is possible to prevent the occurrence of a spray dry phenomenon by shortening a spray distance. Consequently, a loss of a spray liquid and generation of powdery dust can be suppressed, and a processing time can be shortened. Also, in the case of coating of tablets, a phenomenon hardly occurs such that a punch mark on the surface of the tablet is filled with fine particles generated through spray dry.

(4) Because a flow rate of atomized air is small, a temperature drop inside the rotating drum and an increase in quantity of exhaust can be suppressed. It is thus possible to shorten the processing time and reduce the exhaust facility in size.

(5) Because the spray gun can be of a structure that injects a vortex of atomized air, it is possible to turn a spray liquid into finer mist.

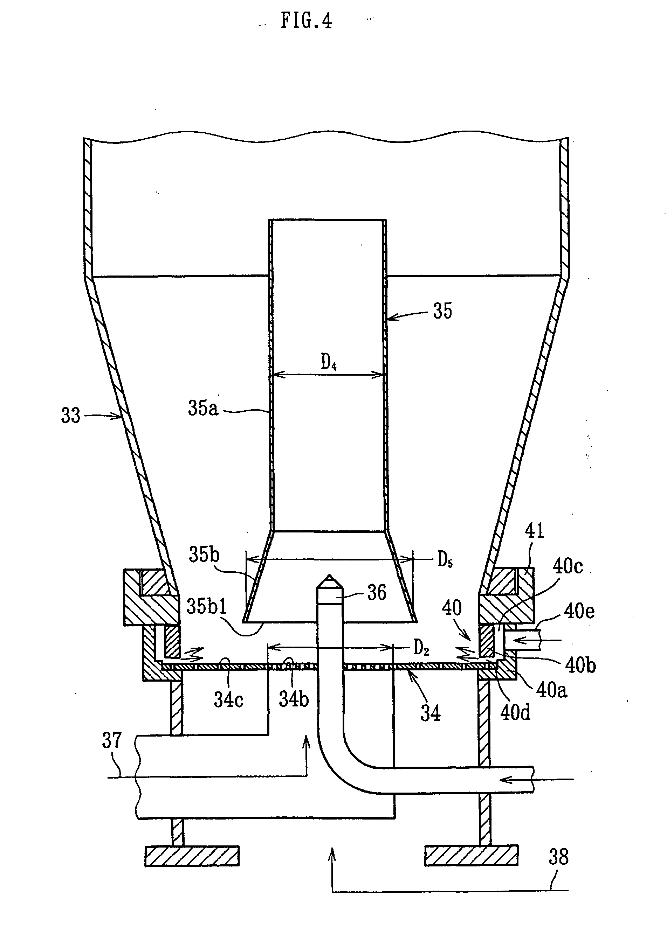

FIG. 4 is a view showing a major portion of a fluidized bed apparatus (a so-called Worster fluidized bed apparatus) according to a second embodiment.

A processing container (fluidized bed container) 33 is shaped like a circular cylinder at the upper portion and shaped like a conical cylinder at the lower portion (there may be a case that the upper portion is shaped like a conical cylinder and the lower portion is shaped like a circular cylinder). An unillustrated filter chamber (see the filter chamber 7' of FIG. 7) is provided in a space above, and a gas scattering plate 34 composed of a porous plate, such as punched metal, is provided at the bottom. In general, a metal gauze (not shown) or the like is attached to the top surface of the gas scattering plate 34, so that the powder particles within the processing container 33 will not fall off through the pores of the gas scattering plate 34. Also, a draft tube (guiding tube) 35 is provided in such a manner so as to keep a certain distance from the gas scattering plate 34, and a spray gun 36 is placed in an upward orientation so as to penetrate through the center of the gas scattering plate 34.

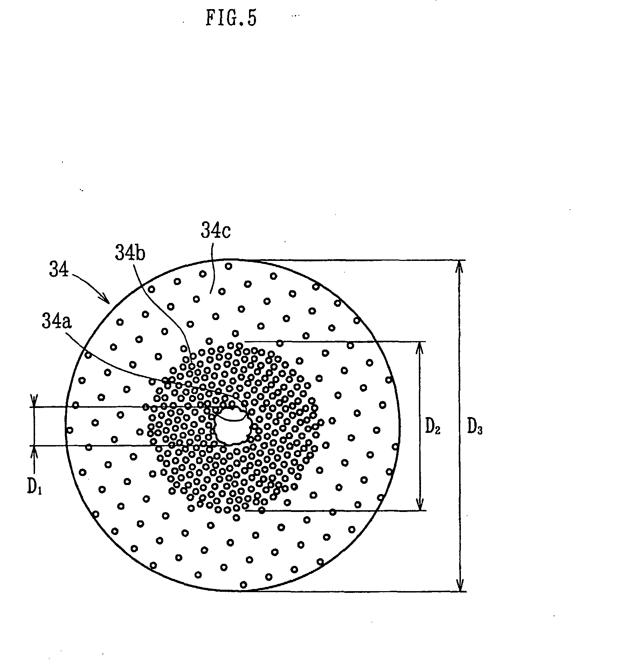

As shown in FIG. 5, the gas scattering plate 34 includes a through hole 34a at the center, into which the spray gun 36 is to be fit. Also, it includes a central region 34b having a large rate of hole area (a ratio of a total area of the openings to a total area of the entire region) on the periphery of the through hole 34a, and a peripheral region 34c having a small rate of hole area on the periphery of the central region 34b. Herein, D1 is given as the outside diameter of the through hole 34a, D2 as the outside diameter of the central region 34b, and D3 as the outside diameter of the peripheral region 34c. The rate of hole area of the central region 34b is, for example, 16 to 55%, and the rate of hole area of the peripheral region 34c is, for example, 1.5 to 16%.

As shown in FIG. 4, the draft tube 35 includes a cylinder portion 35a at the upper portion, and a lower end opening portion 35b at the lower portion, which is shaped like a conical cylinder expanding downward. Here, D4 is given as the diameter of the cylinder portion 35a and D5 is given as the maximum diameter (the diameter of the opening 35b1) of the lower end opening portion 35b. The cross sectional area A4 (= πD42) of the cylinder portion 35a and the maximum cross sectional area A5 (the area of the opening 35b1 = πD52) of the lower end opening portion 35b are set to establish the relation, 1.5 ≤ A5/A4 ≤ 3, for example.

The draft tube 35 is attached to the processing container 33 with an unillustrated attaching member or the like, and the lower end opening portion 35b opposes the central region 34b of the gas scattering plate 34 while keeping a certain distance. The draft tube 35 is set in such a manner that a distance between the lower end opening portion 35b and the gas scattering plate 34 can be adjusted as needed depending on the processing conditions or the like.

The maximum cross sectional area A5 (= πD52) of the lower end opening portion 35b of the draft tube 35 and the area A2 {= π(D22 -D12)} of the central region 34b of the gas scattering plate 34 are set to establish a relation, A2 < A5, for example, 0.4 ≤ A2/A5 ≤ 0.9.

Fluidizing air is introduced into the processing container 33 from the bottom through the gas scattering plate 34. In this embodiment, it is configured in such a manner that fluidizing air is supplied to the central region 34b and the peripheral region 34c of the gas scattering plate 34 via independent feed passages 37 and 38, respectively. To be more specific, fluidizing air is supplied to the central region 34b of the gas scattering plate 34 via the feed passage 37, and fluidizing air is supplied to the peripheral region 34c via the feed passage 38. Feed conditions, such as a temperature and a quantity of fluidizing air, are controlled independently for the feed passages 37 and 38. It should be noted that the feed passages 37 and 38 may be a common passage.

Fluidizing air supplied via the feed passage 37 is injected from the central region 34b of the gas scattering plate 34, then flows into the draft tube 35 through the opening 35b1 of the lower end opening portion 35b, and generates a rising air current inside the tube 35. A large quantity of fluidizing air flowing into the draft tube 35 induces the ejector effect. Hence, nearby powder particles are drawn into the tube 35 through the opening 35b1 of the lower end opening portion 35b and form an entrained bed on the rising air current within the tube 35. On the other hand, fluidizing air supplied via the feed passage 38 is injected from the peripheral region 34c of the gas scattering plate 34. However, because the rate of hole area of the peripheral region 34c is small, a quantity and a flow velocity of the fluidizing air injected from the region 34c are both smaller than those of the fluidizing air injected from the central region 34b. For this reason, the powder particles flown out through the upper end opening of the draft tube 35 start to fall after they rise up to a certain level within the processing container 33, and reach the vicinity of the gas scattering plate 34 by passing through a space between the draft tube 35 and the wall surface of the processing container 33. Then, the powder particles are drawn into the draft tube 35 again through the opening 35b1 of the lower end opening portion 35b due to the ejector effect. In this manner, fluidized circulation of the powder particles takes place within the processing container 33.

In this embodiment, gas injection means 40 is provided on the periphery of the bottom of the processing container 33 in order to effectively prevent particles from accumulating at the bottom of the processing container 33. The gas injection means 40 is composed of, for example, an outside ring 40a, an inside ring 40b, an annular chamber 40c formed in a space between the outside ring 40a and the inside ring 40b, an annular slit 40d formed below the inside ring 40b, a feed tube 40e for supplying the chamber 40c with compressed air, and a pressure adjustor (not shown) for adjusting a supply pressure of compressed air. Compressed air supplied to the chamber 40c via the feed tube 40e is injected at the bottom of the processing container 33 from the slit 40d, and scatters aggregation of particles accumulating at the outside of the draft tube 35 and promotes circulation within the draft tube 35. Compressed air injected from the slit 40d scatters particles causing secondary aggregation, and prevents agglomerate from being formed more effectively. Compressed air may be supplied to the chamber 40c continuously or intermittently using, for example, a timer, a solenoid valve, etc. Also, the slit 40d is not necessarily formed into an annular shape, and it may be divided along the circumferential direction (the same applies to the chamber 40c).

The spray gun 36 sprays a spray liquid (filming agent liquid, a medical agent liquid, etc.) in an upward direction from below toward the powder particles rising above on the rising current air (jet) within the draft tube 35, and is used under the conditions that an injection pressure of atomized air is 0.2 MPa or above and preferably 0.2 to 0.6 MPa, and an air flow rate of atomized air is 10 to 180 Nl/min and preferably 10 to 120 Nl/min. A coating layer is formed as the base components in the mist of a spray liquid sprayed from the spray gun 36 adhere to the surfaces of the powder particles.

Various types of spray guns described in the first embodiment above can be used as the spray gun 36. Because the spray gun 36 turns a spray liquid into mist with atomized air at a medium or high pressure, a flow velocity of the atomized air in the vicinity of the injection outlet is still high even when an air flow rate is reduced, and mist of a spray liquid can be therefore atomized in a satisfactory manner. Also, because a flow velocity of the atomized air is low when it reaches the powder particles, pulverization and a blown-up phenomenon of the powder particles caused by a stream of atomized air injected from the spray gun 36 hardly occur. Further, because an air flow rate is small in comparison with the case of using the standard spray gun or the HVLP type spray gun, a temperature drop inside the processing container 33 and an increase in quantity of exhaust can be suppressed.

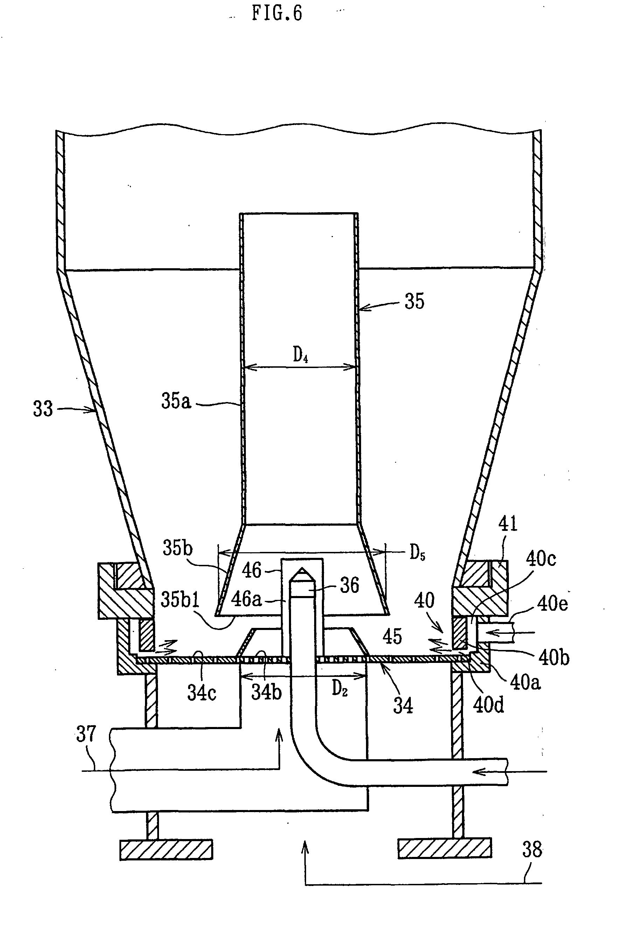

FIG. 6 is a view showing a major portion of a fluidized bed apparatus (a so-called Worster fluidized bed apparatus) according to a third embodiment. A difference between the fluidized bed apparatus of this embodiment and the fluidized bed apparatus shown in FIG. 4 is that a guide tube 45 and a partition collar 46 are additionally provided.

In this embodiment, the guide tube 45 is shaped like a short conical cylinder shortened upward. The lower end opening of the guide tube 45 has an inside diameter equal to (or nearly equal to) the outside diameter D2 of the central region 34b of the gas scattering plate 34, and fixed to the top surface of the gas scattering plate 34 by any adequate means. The upper end opening of the guide tube 45 is positioned to oppose the opening 35b1 of the lower end opening portion 35b of the draft tube 35. By providing the guide tube 45, it is possible to confer the directivity toward the lower end portion 35b of the draft tube 35 to fluidizing air injected from the central region 34b of the gas scattering plate 34. This enhances the ejector effect further, and particles are drawn into the draft tube 35 at a higher concentration. The guide tube 45 may be shaped like a short conical cylinder that expands upward, or a short circular cylinder. It is preferable to make the dimension in height adjustable.

The partition collar 46 is of a circular cylindrical shape, and is provided to surround the circumference of the spray gun 36 while keeping a certain distance. The lower end opening of the partition collar 46 is fixed to the top surface of the central region 34b of the gas scattering plate 34 by any adequate means. The upper end opening of the partition collar 46 is placed at a position as high as or higher than the tip end (injection output) of the spray gun 36. By providing the partition collar 46, an annular gas passage 46a is defined in a space between the partition collar 46 and the outer circumference of the spray gun 36. A stream of air that rises above along the gas passage 46a prevents pulverization of particles by a high-speed stream of atomized air in the region near the tip end of the spray gun 36, and also it prevents aggregate (agglomerate) that is formed when mist of an insufficiently atomized spray liquid comes in contact with particles. Also, because the tip end of the spray gun 36 is constantly covered with a stream of air that rises above along the gas passage 46a, blot or clogging of the injection outlet of the spray gun 36 due to adhesion of particles hardly occurs, which enables a stable processing operation over a long period. It is preferable to set the partition collar 46 in such a manner that the dimension in height is adjustable.

In the second and third embodiments, the draft tube may be of a circular cylindrical shape like the one shown in FIG. 7.

According to the second and third embodiments, the following advantages can be achieved.

(1) Because a spray liquid is turned into mist by a spray gun used under the conditions that the injection pressure of atomized air is 0.2 MPa or above and an air flow rate thereof is 10 to 180 Nl/min, it is possible to save the processing costs and reduce the facility in size using a less quantity of air while ensuring atomization of a spray liquid by the spray gun.

(2) Because a flow velocity of atomized air is low when it reaches the powder particles, pulverization and a blown-up phenomenon of the powder particles caused by a stream of atomized air injected from the spray gun hardly occur. It is thus possible to make the product quality uniform, sharpen the size distribution of product particles, and improve the product yield.

(3) Because an air flow rate is small in comparison with the standard spray gun and the HVLP type spray gun, a temperature drop inside the processing container and an increase in quantity of exhaust can be suppressed. It is thus possible to shorten the processing time and reduce the exhaust facility in size.

(4) By using the spray gun of a type that injects a vortex of atomized air, it is possible to turn a spray liquid into finer mist.

(5) The invention can achieve a noticeable advantage when the adopted spray method is either the bottom spray method for spraying a spray liquid upward from the bottom of the processing container, or the tangential spray method for spraying a spray liquid in the tangential direction from the side portion of the processing container.

## Claims

1. A powder processing apparatus for performing one of granulation and coating by spraying mist of a spray liquid toward powder particles within a processing container from a spray gun, wherein conditions of the spray gun are such that an injection pressure of atomized air is 0.2 MPa or above and an air flow rate of atomized air is 10 to 180 Nl/min.

2. The powder processing apparatus according to Claim 1, wherein the processing container is a rotating drum that rotates about an axis line.

3. The powder processing apparatus according to Claim 1, wherein the processing container is a fluidized bed container that forms a fluidized bed of the powder particles therein.

4. The powder processing apparatus according to Claim 1, wherein the atomized air is injected as a vortex.

5. The powder processing apparatus according to Claim 3, wherein the spray gun sprays the spray liquid in one of a manner that the spray liquid is sprayed upward from a bottom of the processing container, and a manner that the spray liquid is sprayed in a tangential direction from a side portion of the processing container.
